**Europäisches Patentamt**

**European Patent Office**

**Office européen des brevets**

(19)

(11) **EP 1 593 706 A1**

(12) **EUROPÄISCHE PATENTANMELDUNG**

(43) Veröffentlichungstag:
**09.11.2005 Patentblatt 2005/45**

(51) Int Cl.$^7$: **C08K 5/37**

(21) Anmeldenummer: **05009157.8**

(22) Anmeldetag: **26.04.2005**

(84) Benannte Vertragsstaaten:
**AT BE BG CH CY CZ DE DK EE ES FI FR GB GR HU IE IS IT LI LT LU MC NL PL PT RO SE SI SK TR**
Benannte Erstreckungsstaaten:
**AL BA HR LV MK YU**

(30) Priorität: **05.05.2004 DE 102004022106**

(71) Anmelder: **LANXESS Deutschland GmbH**
**51369 Leverkusen (DE)**

(72) Erfinder:
• **Weidenhaupt, Hermann-Josef, Dr.**
**50259 Pulheim (DE)**

• **Buding, Hartmuth, Dr.**
**52445 Titz (DE)**
• **Hahn, Josef, Prof. Dr.**
**50996 Köln (DE)**
• **Häp, Nicole**
**50354 Hürth (DE)**
• **Palloch, Petra, Dr.**
**04155 Leipzig (DE)**
• **Ucal, Nesibe**
**51375 Leverkusen (DE)**
• **Zettl, Uwe, Dr.**
**50354 Hürth (DE)**

(54) **Verwendung von Metall-Alkandithiole als Vernetzungsagenzien für ungesättigte Kautschuke**

(57) Die Erfindung betrifft die Verwendung von Metall-Alkandithiole als Vulkanisiermittel für ungesättigte Kautschuke.

**EP 1 593 706 A1**

**Beschreibung**

Die Erfindung betrifft die Verwendung von Metall-Alkandithiole als Vernetzungsagenzien für ungesättigte Kautschuke.

Schwefel ist auch heute noch das gebräuchlichste Vulkanisationsmittel für ungesättigte Kautschuke, wie z. B. Naturkautschuk (NR), Isoprenkautschuk (IR), Butadien-kautschuk (BR) und Styrol-Butadien-Kautschuk (SBR). Bei der Herstellung von Weichgummi verwendet man 0,25 bis 5,0 Gew.-Teile Schwefel, bezogen auf 100 Gew.-Teile Kautschuk. Die effektiv angewendete Menge an Schwefel ist abhängig von der gewählten Menge an Vulkanisationsbeschleuniger, was letztlich durch die gewünschten Vulkanisateigenschaften bestimmt wird.

Sehr häufig gebrauchte Vulkanisiersysteme sind das konventionelle und das semi-effiziente Vulkanisiersystem. Das konventionelle Vulkanisiersystem ist reich an Schwefel und arm an Vulkanisationsbeschleuniger, wohingegen das semi-effiziente Vulkanisiersystem eine mittlere Dosierung an Schwefel und Vulkanisationsbeschleuniger aufweist. Dem Fachmann sind die typischen Dosierungen bekannt und sind z.B. beschrieben in W. Hofmann, Kautschuk-Technologie, Genter Verlag, Stuttgart, 1980, S. 64 und 254-255. Konventionelle Vulkanisiersysteme ergeben dynamisch gut belastbare Vulkanisate, wobei jedoch diese sehr alterungs- und reversionsempfmdlich sind. Semi-effiziente Vulkanisiersysteme ergeben üblicherweise dynamisch weniger gut belastbare Vulkanisate, dafür sind sie aber etwas alterungs- und reversionsstabiler.

Unter Reversion versteht man eine unter Temperatureinwirkung in Abwesenheit von Sauerstoff stattfindende Netzbrückenumlagerung, die zu einer Verschlechterung der Gebrauchseigenschaften des Vulkanisats führt und somit unerwünscht ist (anaerobe Alterung). Reversion findet unabdingbar einmal bei der Vulkanisation von sehr dicken und voluminösen Bauteilen statt, z.B. bei LKW-Reifen und Fendern. Die physikalische Erklärung hierfür ist einfach: Wenn die innenliegenden Kautschukmischungsvolumina durch den über die heiße Vulkanisationsform eingebrachten Wärmefluss gerade richtig vulkanisiert sind, so sind die unmittelbar an der heißen Vulkanisationsform anliegenden Kautschukmischungsvolumina naturgemäß bereits übervulkanisiert. Zum anderen findet während des Gebrauchs dieser Gummiteile bei lang andauernder, intensiver dynamischer Belastung durch mangelnde Hysterese (bei Walkarbeit des Reifens) eine Temperaturerhöhung (heat build-up) des Gummiteils statt, was eine Reversion des Vulkanisats nach sich zieht. Die Reversion kann in einem solchen Ausmaß stattfinden, dass sie sogar zur Zerstörung führt.

In den letzten Jahren wurden einige Reversionsschutzmittel-Spezialitäten bekannt,, die die Reversion entweder durch Einbau von thermisch stabilen, praktisch nicht zur Reversion befähigten Netzbrücken minimieren (vgl. EP 530 590) oder die nach bereits erfolgter Reversion die gebrochenen, klassischen Netzstellen durch andere stabilere ersetzen (vgl. R.N. Datta und W.F. Helt, Rubber World, August 1997, S. 24 ff).

Kommerziell verfügbare Reversionsschutzmittel-Spezialitäten sind z.B. das Dinatriumsalz von Hexamethylen-1,6-dithiosulfat-dihydrat und 1,3-Bis(citraconimidomethyl)-benzol.

Allgemeiner Nachteil dieser kommerziellen Reversionsschutzmittel-Spezialitäten ist ihr relativ hoher Preis, der einmal durch nicht in großen Mengen verfügbaren Edukten sowie durch die schwierige und aufwendige Herstellung dieser Produkte bedingt ist, wodurch eine breite Anwendung in der unter stetigem Kostenreduzierungsdruck stehenden kautschukverarbeitenden Industrie, insbesondere in der Reifenindustrie, verhindert wird. Ein spezifischer Nachteil des Dinatrium-Hexamethylen-1,6-dithiosulfat-dihydrat ist seine aufwendige Lieferform. Aufgrund seines Salzcharakters muß es im Hinblick auf eine gute Einmischbarkeit sehr fein gemahlen werden, was andererseits wieder aus arbeitshygienischer Sicht eine Beölung des Pulvers zur Staubunterdrückung nach sich zieht.

Ein spezifischer Nachteil von 1,3-Bis(citraconimidomethyl)-benzol ist, dass es im Vulkanisat erst dann, und nur dann, wirksam werden kann, wenn bei dem mit Schwefel vernetzten ungesättigten Kautschuk die Reversion bereits eingesetzt hat und so konjugierte Olefine entstanden sind, die ihrerseits in einer Nachvernetzung mit dem Citraconderivat (via Diels-Alder-Reaktion) zu einem neuen, jetzt aber andersartigen Netzwerk abreagieren können.

Ein Nachteil, der in den Vulkanisiermitteln der EP 530 590 gesehen werden kann, ist ihr hohes Molekulargewicht, verglichen mit der eigentlich vernetzend wirkenden Spezies.

Die Herstellung von Zink-, Cadmium-, Indium-, Thallium-, Kupfer- oder Silber-Derivaten von $\alpha,\omega$-Alkandithiole sind schon lange bekannt. So beschreibt H. E. Mabrouk et.al. (Inorganica Chimica Acta, 145 (1988), 237 - 241) die direkte elektrochemische Synthese von Zink oder Cadmium zu den entsprechenden Derivaten. Eine Verwendung als Vernetzungsagenz für ungesättigte Dienkautschuke wird nicht beschrieben.

In EP 0 383 150 wird die Verwendung von Cobalt- bzw. Nickelhexanyldithiol als Adhesionpromoter für Haftmischungen auf Basis ungesättigter Kautschuke beschrieben. Diese Mischungen werden üblicherweise mit hohen Schwefeldosierungen vernetzt und der Adhesionpromoter soll die Haftung zwischen der schwefelvernetzten Kautschukmatrix und dem Verstärkungsmaterial (vermessingter Stahlcord) verbessern. Eine Verwendung als Vernetzungsagenz wird nicht beschrieben.

Üblicherweise werden in breitem Maße die aus ungesättigten Kautschuken hergestellten Vulkanisate nur mit Schwefel und Beschleuniger als Vulkanisiermittel hergestellt, d.h. also ohne Agenzien, die die Reversion verhindern oder vermindern. Die Eigenschaften von klassisch mit konventionellen und semi-effizienten Vulkanisiersystemen hergestellten Kautschukvulkanisaten sind aber verbesserungswürdig. Es besteht somit ein Bedarf nach einem Vulkanisiermittel für ungesättigte Kautschuke, das überwiegend auf in großen Mengen leicht und kostengünstig verfügbaren Bausteinen basiert, technisch leicht herstellbar ist, und das den zum Ausblühen neigenden kristallinen Schwefel in einem Vulkanisiersystem ganz oder teilweise ersetzen kann und zu Vulkanisaten mit verbesserter Reversionsstabilität, insbesondere nach Überheizung führt.

Die Aufgabe wurde überraschenderweise gelöst durch Vulkanisation einer ungesättigten Kautschukmischung mit speziellen Metall-Alkandithiolen.

Gegenstand der Erfindung ist daher die Verwendung von Metall-Alkandithiolen der Formel

$$M^{2+} [S\text{-}(CH2)6\text{-}S]^{2-}$$

mit M = Zn, Cu, Fe, Mn

als Vulkanisiermittel zur Herstellung von ungesättigten Kautschukvulkanisaten.

Die erfindungsgemäßen Metall-Alkandithiole der genannten Formel werden erhalten durch Umsetzung des entsprechenden Metallsalzes mit 1,6-Hexandithiol in geeignetem Lösungsmittel. Das ausgefallene Produkt wird abfiltriert, gewaschen und anschließend getrocknet.

Die erfindungsgemäßen Metall-Alkandithiole der obiger Formel können als Vulkanisationsmittel für ungesättigte Kautschukmischungen zur Herstellung von Gummi-Formkörpern, wie z.B. Schläuche, Dichtungen, Motorlager und Fender, insbesondere aber zur Herstellung von Reifenbauteilen, wie z.B. Laufflächen, Drahtkappen, Seitenteil- und Wulststreifen, Schulterpolster, Gürtelabdeckungen, Laufflächen-Unterplatten und Seitenwände, eingesetzt werden.

Die Herstellung von Kautschukmischungen für die Vulkanisation erfolgt in an sich bekannter Weise durch übliches Vermischen der ungesättigten Kautschukkomponenten mit den bekannten Zusätzen bzw. Zuschlagstoffen, wie Ruß, Kieselsäure, Weichmacher, Alterungsschutzmittel, Zinkoxid, Stearinsäure, Harz, Verarbeitungswirkstoff sowie dem Vulkanisiersystem bestehend aus den erfindungsgemäßen Metall-Alkandithiolen und gegebenenfalls unter Zusatz von elementarem Schwefel.

Die erfindungsgemäßen Metall-Alkandithiole können entweder bei der Herstellung der Grundmischung unter sorgfältigem Ausschluss einer Anvulkanisation eingesetzt werden oder bevorzugt bei der Herstellung der Fertigmischung zusammen mit den Vulkanisationsbeschleunigern und dem Schwefel, falls erwünscht.

Ungesättigte Kautschuke im Sinne der Erfindung sind z.B. Naturkautschuk (NR), Isoprenkautschuk (IR), Butadienkautschuk (BR) und Styrol-Butadien-Kautschuk (SBR), der nach dem Emulsionsverfahren als auch nach dem Lösungsverfahren hergestellt sein kann, Nitrilkautschuk (NBR), teilhydrierter Nitrilkautschuk (H-NBR) und Ethylen-Propylen-Dienkautschuk (EPDM). Gleich gute Ergebnisse werden auch mit Verschnitten dieser Kautschuke erhalten.

Die Verwendung der Ruße für die Kautschukmischungen unterliegt keiner Einschränkung. Bevorzugt werden die in der kautschukverarbeitenden Industrie typischerweise angewendeten Ruße eingesetzt, wie aktive und halbaktive Ruße.

Der Einsatz von Kieselsäuren unterliegt ebenfalls keiner Einschränkung. Bevorzugt werden hochdisperse Kieselsäuren, hergestellt durch Fällung von Lösungen von Silikaten oder durch Flammhydrolyse von Siliciumhalogeniden, eingesetzt. Die bevorzugten Kieselsäuren haben eine spezifische Oberfläche von etwa 20 bis 400 m$^2$/g (BET-Oberfläche) und eine Primärteilchengröße von ca. 10 bis 400 nm.

Die erfindungsgemäßen Metall-Alkandithiole werden in Mengen von 0,2 bis 10 Gew.-Teilen, bevorzugt in Mengen von 0,5 bis 6,0 Gew.-Teilen, eingesetzt, bezogen auf 100 Gew.-Teile Kautschuk. Sofern zusätzlich Schwefel eingesetzt werden soll, kommt der üblicherweise in der kautschukverarbeitenden Industrie verwendete Schwefel oder auch sogenannter unlöslicher Schwefel in Frage. Die bevorzugte Menge an Schwefel beträgt 0,05 bis 2,5 Gew.-Teile, bevorzugt 0,1 bis 1,5 Gew.-Teile, bezogen auf 100 Gew.-Teile Kautschuk.

Selbstverständlich können anstelle des Schwefels auch die bekannten Schwefelspender, beispielsweise Caprolactamdisulfid, wie auch Abmischungen mit Schwefel eingesetzt werden. Die für den Verwendungszweck günstigste Menge an Schwefelspender kann durch Vorversuche leicht ermittelt werden.

Als Vulkanisationsbeschleuniger können die verschiedensten Typen eingesetzt werden und unterliegen keiner Einschränkung. Bevorzugt werden Mercaptobenzthiazol (MBT), Dibenzothiazyldisulfid (MBTS), Sulfenamide auf Basis von MBT, wie z.B. Benzothiazyl-2-cyclohexylsulfenamid (CBS), Benzothiazyl-2-dicyclohexylsulfen-amid (DCBS), Benzothiazyl-2-tert.-butylsulfenamid (TBBS) und Benzothiazyl-2-sulfenmorpholid (MBS) eingesetzt. Die Vulkanisationsbeschleuniger werden in Mengen von 0,3 bis 5,0 Gew.-Teilen, bevorzugt in Mengen von 0,5 bis 3,5 Gew.-Teilen, bezogen auf 100 Gew.-Teile eingesetzten Kautschuk, eingesetzt. Es können aber auch Mischungen aus Vulkanisationsbeschleunigern eingesetzt werden, deren optimale Zusammensetzung hinsichtlich Typ und Menge leicht durch Versuche ermittelt werden kann.

Die Vulkanisation der erfindungsgemäßen Kautschukmischungen wird in bekannter Weise bei Temperaturen von ca. 120° bis 220°C, bevorzugt von 140° bis 180°C, durchgeführt.

**Beispiele**

Herstellung der erfindungsgemäßen Metall-Alkandithiole der Formel (I)

**Beispiel 1**

Synthese von $Zn^{2+}[S-(CH2)6-S]^2$

In einem 100 ml Becherglas werden 1,50 ml (9,93 mmol) 1,6-Hexandithiol in 25 ml Methanol vorgelegt. Unter Rühren wird langsam 1,83 g (11,3 mmol) Zink(II)acetat-Dihydrat in 25 ml Methanol zugetropft. Der ausgefallene Niederschlag wird abfiltriert, mit Methanol gewaschen und getrocknet. Die Ausbeute beträgt 2,10 g (99%).
Die Verbindung schmilzt bei 295°C unter Zersetzung.

**Beispiel 2**

Synthese von $Cu^{2+}[S-(CH2)6-S]^2$

In einem 100 ml Erlenmeyerkolben werden 2,00 g (9,19 mmol) Kupfer(II)acetat-Dihydrat in 50 ml N,N-Dimethylformamid unter Rühren gelöst. Die Lösung wird portionsweise zu einer Lösung von 1,50 ml (9,93 mmol) 1,6-Hexandithiol in 25 ml N,N-Dimethylformamid in einem 250 ml Rundkolben gegeben. Die Lösung färbt sich zunächst gelb, anschließend entsteht ein grüner Niederschlag. Der ausgefallene Niederschlag wird abfiltriert, mehrmals mit N,N-Dimethylformamid gewaschen und getrocknet. Die Ausbeute beträgt 1,73 g (89%).
Die Verbindung schmilzt bei 175°C unter Zersetzung.

**Beispiel 3**

Synthese von $Fe^{2+}[S-rCH2)6-S]^{2-}$

In einem 100 ml Becherglas werden 1,50 ml (9,93 mmol) 1,6-Hexandithiol und 1,99 g (10,0 mmol) Eisen(II) dichlorid-Tetrahydrat in 50 ml Methanol vorgelegt. Unter Rühren wird tropfenweise Triethylamin hinzu gegeben bis sich die ausgefällten grünen Flocken leicht braun färben. Die überstehende Lösung wird in ein zweites Becherglas abdekantiert und der grüne Niederschlag in Methanol suspendiert. Dieser Vorgang wird mit der dekantierten Lösung mehrfach wiederholt bis der entstehende Niederschlag deutlich braun gefärbt ist und durch Zusatz einiger Tropfen 1,6-Hexandithiol nicht wieder entfärbt werden kann. Der erhaltenen Niederschlag wird abfiltriert, mit Methanol gewaschene und getrocknet. Die Ausbeute beträgt 1,75 g (86%).
Die Verbindung schmilzt bei 56°C unter Zersetzung.

**Beispiel 4**

Synthese von $Mn^{2+}[S-(CH2)6-S]^2$

In einem 100 ml Rundkolben mit Seitenhahn und Tropftrichter wird eine Lösung aus 1,50 ml (9,93 mmol) 1,6-Hexandithiol in 25 ml [lacuna] vorgelegt. Eine Lösung aus 2,45 g (11,7 mmol) Mangan(II)acetat-Dihydrat in 25 ml Methanol wird im Argon-Gegenstrom in den Tropftrichter gegeben und langsam zugetropft. Nach beendeter Zugabe werden 2,00 ml (0,01 mol) Triethylamin zugegeben. Der pH-Wert der Lösung beträgt 10. Die Lösung wird bei Raumtemperatur noch 2h unter Argonatmosphäre nachgerührt. Der ausgefallene Niederschlag wird abfiltriert, mehrmals mit Methanol gewaschen und getrocknet. Die Ausbeute beträgt 1,81 g (90%).
Die Verbindung schmilzt bei 139°C unter Zersetzung.

Erläuterungen zu den gummitechnologischen Prüfungen

Folgende Testmethoden bzw. Testvorrichtungen wurden benützt: Rheometer: ASTM D 2084, Monsanto MDR 2000E. Zugversuch: DIN 53405, S2-Stab. Härte: DIN 53505. Rückprallelastizität: DIN 53512. Weiterreißwiderstand: DIN 53504. Abrieb DIN 53516. Viskoelastische Eigenschaften: DIN 53513/ISO 4664, Roelig-Test 10 Hz. Dynamische Eigenschaften: DIN 53533.

**Beispiel 5**

Die neuen Vulkanisiermittel wurden in einer rußgefüllten Naturkautschukmischung (100 Teile NR, 5 Teile ZnO RS, 3 Teil Stearinsäure, 45 Teile Russ N330, 2 Teile 6PPD, 5 Teile aromatischer Weichmacher) getestet. Die Herstellung erfolgte im Innenmischer GK 1,5E der Fa. Werner & Pfleiderer. Schwefel, Beschleuniger (CBS) und Vulkanisiermittel wurden auf der Walze nachgemischt. Die Mengenangaben stellen Gew.-Teile pro 100 Gew.-Teile Kautschuk dar.

Tabelle 1:

| Vernetzerdosierung | |
|---|---|
| Vergleich 1 | 1 Teil Schwefel |
| Beispiel 1 | 1,54 Teile Verbindung gemäß Beispiel 1, 1,24 Teile Schwefel |
| Beispiel 2 | 1,12 Teile Verbindung gemäß Beispiel 2, 0,93 Teile Schwefel |
| Beispiel 3 | 1,28 Teile Verbindung gemäß Beispiel 3, 0,45 Teile Schwefel |
| Beispiel 4 | 1,12 Teile Verbindung gemäß Beispiel 4, 0,93 Teile Schwefel |

Als Beschleuniger wurde zu jeder Mischung 3,4 Teile CBS zugegeben.

Tabelle 2

| Bestimmung der Reversion im Rheometer | | |
|---|---|---|
| | Drehmoment relativ zum Vergleich 1 | Reversion relativ zum Vergleich 1 |
| Vergleich 1 | 100 % | 100 % |
| Beispiel 1 | 94 % | 4% |
| Beispiel 2 | 91 % | 8% |
| Beispiel 3 | 97 % | 5% |
| Beispiel 4 | 97 % | 73 % |

Die Reversion in % wurde aus den Rheometer-Daten (160 °C, 60 min) wie folgt bestimmt:

$$(S'max - S'end) \times 1/S'max \times 100 \; (\%)$$

und relativ zum Vergleich 1 berechnet.

Aus Tabelle 2 geht hervor, dass einmal die Mischungen gemäß der Erfindung eine deutlich höhere Reversionsbeständigkeit (je kleiner der Wert der Reversion, desto höher die Reversionsbeständigkeit) aufweisen als die Vergleichsmischung 1.

**Beispiel 6**

Mit Hilfe eines Innenmischers vom Typ GK 1,5E der Firma Werner & Pfleiderer wurden bei einer Rotordrehzahl von 40 Upm und einer Kammer- und Schaufeltemperatur von 50°C (Stempeldruck 8 bar, Füllgrad 65%) Testmischungen gemäß Tabelle 3 hergestellt.

Beschleuniger, Schwefel und das erfindungsgemäße Zinkhexanyldithiol gemäß Beispiel 1 wurden auf der Walze zugemischt. Die Mengenangaben stellen Gew.-Teile pro 100 Gew.-Teile Kautschuk dar.

Tabelle 3:

| Testrezeptur | | |
|---|---|---|
| | Vergleich | Erfindung |
| Mischungsnummer | 1 | 2 |
| NR (TSR 5, Defo 1000) | 100 | 100 |
| Zinkoxid RS | 5 | 5 |
| Stearinsäure | 3 | 3 |
| Ruß N330 | 45 | 45 |

Tabelle 3:   (fortgesetzt)

| Testrezeptur | | |
|---|---|---|
| | Vergleich | Erfindung |
| 6PPD | 2 | 2 |
| Arom. Weichmacher | 5 | 5 |
| Schwefel | 1,5 | 1,5 |
| CBS | 1,5 | 1,5 |
| Zink-hexanyldithiol gemäß Beispiel 1 (Erfindung) | 0 | 3,0 |

Tabelle 4:

| Rheometer-Daten | | |
|---|---|---|
| | Vergleich | Erfindung |
| Mischungsnummer | 1 | 2 |
| 160°C/60 min | | |
| t01 (min) | 1,85 | 0,66 |
| t90 (min) | 3,88 | 5,06 |
| S' max (dNm) | 14,44 | 13,92 |
| S' end (dNm) | 11,8 | 13,64 |
| Reversion (%) | 18,3 | 2,0 |

Die Reversion in % wurde aus den Rheometer-Daten wie folgt bestimmt:

$$(S'max - S'end) \times 1/S'max \times 100 \ (\%)$$

Aus Tabelle 4 geht hervor, dass einmal die Mischungen gemäß der Erfindung eine deutlich höhere Reversionsbeständigkeit (je kleiner der Wert der Reversion, desto höher die Reversionsbeständigkeit) aufweisen als die Vergleichsmischung 1.

Tabelle 5:

| Eigenschaften der Testvulkanisate nach Optimalheizung | | |
|---|---|---|
| | Vergleich | Erfindung |
| Mischungsnummer | 1 | 2 |
| Vulkanisation: 160°C/8 min | | |
| Festigkeit (MPa) | 30 | 31 |
| Bruchdehnung (%) | 559 | 579 |
| Modul 100 (MPa) | 2,1 | 2,0 |
| Modul 300 (MPa) | 11,6 | 10,7 |
| Härte bei 23°C (Shore A) | 61 | 59 |
| Elastizität bei 23°C (%) | 53 | 50 |
| Abrieb (mm$^3$) | 134 | 145 |
| Roelig 0°C | | |
| tan delta | 0,169 | 0,168 |
| E' (MPa) | 6,755 | 6,496 |
| E" (MPa) | 1,125 | 1,093 |
| Roelig 60°C | | |
| tan delta | 0,077 | 0,076 |

Tabelle 5: (fortgesetzt)

| Eigenschaften der Testvulkanisate nach Optimalheizung | | |
|---|---|---|
| | Vergleich | Erfindung |
| E' (MPa) | 5,141 | 4,912 |
| E" (MPa) | 0,395 | 0,370 |

Aus Tabelle 5 geht hervor, dass die Vulkanisate gemäß der Erfindung vergleichbare Eigenschaften nach Optimalheizung aufweisen wie das Vergleichsvulkanisat.

Tabelle 6:

| Eigenschaften der Testvulkanisate nach Überheizung | | |
|---|---|---|
| | Vergleich | Erfindung |
| Mischungsnummer | 1 | 2 |
| Vulkanisation: 160°C/120 min | | |
| Festigkeit (MPa) | 25,3 | 26,7 |
| Bruchdehnung (%) | 553 | 481 |
| Modul 100 (MPa) | 1,7 | 2,0 |
| Modul 300 (MPa) | 9,1 | 11,4 |
| Härte bei 23°C (Shore A) | 57 | 60 |
| Elastizität bei 23°C (%) | 47 | 51 |
| Abrieb (mm$^3$) | 236 | 148 |
| Roelig 0°C | | |
| tan delta | 0,191 | 0,174 |
| E' (MPa) | 6,873 | 6,801 |
| E" (MPa) | 1,287 | 1,342 |
| Roelig 60°C | | |
| tan delta | 0,104 | 0,086 |
| E' (MPa) | 4,675 | 5,054 |
| E" (MPa) | 0,486 | 0,435 |

Aus Tabelle 6 geht hervor, dass nach Überheizung die Vulkanisate gemäß der Erfindung eine günstigere Retention des Moduls, Abrieb und Verlustfaktor (tan delta) aufweisen als das Vergleichsvulkanisat.

**Patentansprüche**

1. Verwendung von Metall-Alkandithiolen der Formel

$$M^{2+}[S\text{-(CH2)6-S}]^{2-}$$

mit M = Zn, Cu, Fe, Mn
als Vulkanisiermittel zur Herstellung von ungesättigten Kautschukvulkanisaten.

2. Verwendung der Metall-Alkandithiole gemäß Anspruch 1 zur Herstellung von Gummi-formkörpern.

3. Verwendung der Metall-Alkandithiole gemäß Anspruch 1 zur Herstellung von Reifenbauteilen.

**Europäisches Patentamt**

**EUROPÄISCHER RECHERCHENBERICHT**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| A | WO 90/12826 A (AKZO N.V.)<br>1. November 1990 (1990-11-01)<br>* Seite 4, Zeile 3 - Zeile 13 *<br>* Seite 4, Zeile 26 - Seite 5, Zeile 3; Ansprüche 1-28 *<br>----- | 1 | C08K5/37 |
| A | FR 2 078 633 A (HÜLS AG)<br>5. November 1971 (1971-11-05)<br>* Ansprüche 1-7 *<br>----- | 1 | |
| A | DATABASE WPI<br>Section Ch, Week 198720<br>Derwent Publications Ltd., London, GB;<br>Class A14, AN 1987-140999<br>XP002337614<br>& JP 62 081441 A (JAPAN SYNTHETIC RUBBER CO., LTD.) 14. April 1987 (1987-04-14)<br>* Zusammenfassung *<br>----- | 1 | |
| A | DATABASE WPI<br>Section Ch, Week 198202<br>Derwent Publications Ltd., London, GB;<br>Class A11, AN 1982-02721e<br>XP002337615<br>& JP 56 149446 A (BRIDGESTONE TIRE KK)<br>19. November 1981 (1981-11-19)<br>* Zusammenfassung *<br>----- | 1 | RECHERCHIERTE SACHGEBIETE (Int.Cl.7)<br><br>C08K |

Der vorliegende Recherchenbericht wurde für alle Patentansprüche erstellt

| Recherchenort | Abschlußdatum der Recherche | Prüfer |
|---|---|---|
| Den Haag | 25. Juli 2005 | Permentier, W |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument
........................................................................................
& : Mitglied der gleichen Patentfamilie, übereinstimmendes
    Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 05 00 9157

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

25-07-2005

| Im Recherchenbericht angeführtes Patentdokument | Datum der Veröffentlichung | Mitglied(er) der Patentfamilie | Datum der Veröffentlichung |
|---|---|---|---|
| WO 9012826 A | 01-11-1990 | IT 1232850 B | 05-03-1992 |
| | | IT 1232851 B | 05-03-1992 |
| | | IT 1239005 B | 18-09-1993 |
| | | IT 1238066 B | 03-07-1993 |
| | | CA 2053856 A1 | 27-10-1990 |
| | | CA 2053875 A1 | 27-10-1990 |
| | | DE 69005819 D1 | 17-02-1994 |
| | | DE 69005819 T2 | 28-07-1994 |
| | | DE 69007789 D1 | 05-05-1994 |
| | | DE 69007789 T2 | 27-10-1994 |
| | | WO 9012824 A1 | 01-11-1990 |
| | | WO 9012825 A1 | 01-11-1990 |
| | | WO 9012826 A1 | 01-11-1990 |
| | | EP 0470135 A1 | 12-02-1992 |
| | | EP 0470139 A1 | 12-02-1992 |
| | | ES 2062523 T3 | 16-12-1994 |
| | | ES 2062524 T3 | 16-12-1994 |
| | | JP 2975427 B2 | 10-11-1999 |
| | | JP 4507424 T | 24-12-1992 |
| | | JP 4504873 T | 27-08-1992 |
| | | US 5451556 A | 19-09-1995 |
| | | US 5235010 A | 10-08-1993 |
| | | US 5310826 A | 10-05-1994 |
| FR 2078633 A | 05-11-1971 | DE 2008479 A1 | 09-09-1971 |
| | | FR 2078633 A5 | 05-11-1971 |
| | | GB 1330058 A | 12-09-1973 |
| | | JP 49021290 B | 31-05-1974 |
| | | US 3781250 A | 25-12-1973 |
| JP 62081441 A | 14-04-1987 | KEINE | |
| JP 56149446 A | 19-11-1981 | KEINE | |

EPO FORM P0461

Für nähere Einzelheiten zu diesem Anhang : siehe Amtsblatt des Europäischen Patentamts, Nr.12/82